# EUROPÄISCHE PATENTSCHRIFT

(11) **EP 2 417 610 B1**
(45) Veröffentlichungstag und Bekanntmachung des Hinweises auf die Patenterteilung: **01.06.2016**
(21) Anmeldenummer: 10711893.7
(22) Anmeldetag: 31.03.2010
(51) Int. Cl.: H01F 1/01

(54) **WÄRMETRÄGERMEDIUM FÜR MAGNETOKALORISCHE MATERIALIEN**
HEAT CARRIER MEDIUM FOR MAGNETOCALORIC MATERIALS
MILIEU CALORIPORTEUR POUR MATERIAUX MAGNETOCALORIQUES

(30) Priorität: 08.04.2009 EP 09157608
(43) Veröffentlichungstag der Anmeldung: 15.02.2012
(73) Patentinhaber: BASF SE, 67056 Ludwigshafen am Rhein (DE)
(72) Erfinder: SEELER, Fabian, 69221 Dossenheim (DE); DEGEN, Georg, 64653 Lorsch (DE)
(74) Vertreter: BASF IP Association
(86) Internationale Anmeldenummer: PCT/EP2010/054266
(87) Internationale Veröffentlichungsnummer: WO 2010/115791

(56) Entgegenhaltungen:
- DE-A1-102006 046 041
- JP-A- 2008 150 695
- MIN LIU ET AL: "Development of magnetocaloric materials in room temperature magnetic refrigeration application in recent six years" JOURNAL OF CENTRAL SOUTH UNIVERSITY OF TECHNOLOGY CENTRAL SOUTH UNIVERSITY GERMANY LNKD- DOI:10.1007/S11771-009-0001-Y, Bd. 16, Nr. 1, Februar 2009 (2009-02), Seiten 1-12, XP002580268 ISSN: 1005-9784
- CANEPA F ET AL: "Ageing effect on the magnetocaloric properties of Gd, Gd5Si1.9Ge2.1 and on the eutectic composition Gd75Cd25" JOURNAL OF PHYSICS D: APPLIED PHYSICS IOP PUBLISHING LTD. UK LNKD- DOI:10.1088/0022-3727/41/15/155004, Bd. 41, Nr. 15, 7. August 2008 (2008-08-07), Seite 155004 (10 pp.), XP002580269 ISSN: 0022-3727

## Beschreibung

Die Erfindung betrifft die Verwendung von korrosionsstabilisierenden Zusätzen in Wärmeträgermedien oder als Wärmeträgermedium, die in Kontakt mit magnetokalorischen Materialien stehen, entsprechende Wärmeträgermedien und diese enthaltende magnetische Kühler, magnetische Wärmepumpen oder magnetische Generatoren. Magnetokalorische Materialien, auch als thermomagnetische Materialien bezeichnet, können in der magnetischen Kühlung, in Wärmepumpen oder Klimaanlagen sowie Generatoren eingesetzt werden.

Derartige Materialien sind prinzipiell bekannt und beispielsweise in WO 2004/068512 beschrieben. Die magnetischen Kühlungstechniken basieren auf dem magnetokalorischen Effekt (MCE) und können eine Alternative zu den bekannten Dampf-Kreislauf-Kühlverfahren darstellen. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt wird oder entfernt wird, gehen die magnetischen Momente wieder in eine Zufallsanordnung über, was zu einem Abkühlen des Materials unter Umgebungstemperatur führt. Dieser Effekt kann zu Kühlzwecken ausgenutzt werden, siehe auch Nature, Vol. 415, 10. Januar 2002, Seiten 150 bis 152. Typischerweise wird ein Wärmetransfermedium wie Wasser zur Wärmeabfuhr aus dem magnetokalorischen Material eingesetzt.

Die Herstellung üblicher Materialien erfolgt durch Festphasenumsetzung der Ausgangselemente oder Ausgangslegierungen für das Material in einer Kugelmühle, nachfolgendes Verpressen, Sintern und Tempern unter Inertgasatmosphäre und nachfolgendes langsames Abkühlen auf Raumtemperatur. Auch eine Verarbeitung über das Schmelzspinnen ist möglich. Hierdurch ist eine homogenere Elementverteilung möglich, die zu einem verbesserten magnetokalorischen Effekt führt.

Ein Problem beim Einsatz des Wärmetauschermediums bzw. Wärmetransfermedien ist die Korrosionsneigung der magnetokalorischen Materialien. Auf unterschiedlichem Wege wird versucht, diese Korrosion zu verhindern. Korrosion wird auch als Fouling oder Leaching bezeichnet.

Gerade das Herauswaschen toxischer Metalle wie Arsen oder Mangan ist problematisch. Allgemein leiden die Anwendungseigenschaften der magnetokalorischen Materialien durch Korrosion, durch Fouling oder Leaching.

In der US 2007/0220901 ist beschrieben, einen oxidationsbeständigen Film auf der Oberfläche der magnetischen Materialteilchen vorzusehen. Hierbei handelt es sich insbesondere um Aluminiumoxid oder Aluminiumnitrid.

Die JP-A-2006-124783 beschreibt die Beschichtung der magnetischen Teilchen mit einem chemischen Film auf Basis von Phosphorsäure zum Korrosionsschutz.

Die JP-A-2005-226125 beschreibt das Metallplattieren zur Beschichtung von magnetischen Teilchen, wobei durch Ionenplattierung mit einem korrosionsbeständigen Metall der Korrosionsschutz verbessert werden soll.

Diesen Methoden sehen eine aufwendige Weiterbehandlung der magnetokalorischen Materialien vor.

Aufgabe der vorliegenden Erfindung ist die Bereitstellung von Korrosionsschutzmitteln für magnetokalorische Materialien, die eine Beschichtung der magnetokalorischen Materialien vermeiden und in einfacher Weise auch in bereits bestehende magnetische Kühler, magnetische Wärmepumpen oder magnetische Generatoren integriert werden können.

Die Aufgabe wird erfindungsgemäß gelöst durch Verwendung von wässrigen Wärmeträgermedien wie in den Ansprüchen definiert, die wassermischbare Alkohole, Diole, Polyole oder Gemische davon enthalten und die in Kontakt mit magnetokalorischen Materialien stehen, als Korrosionsschutzmittel zu Verhinderung der Korrosion der magnetokalorischen Materialien.

Es wurde gefunden, dass die Korrosion der magnetokalorischen Materialien stark vermindert werden kann, wenn Alkohole, Alkoholamine, Diole oder Polyole als Wärmeträgermedien oder in, vorzugsweise wässrigen, Wärmeträgermedien eingesetzt werden.

Zudem wird hierin die Verwendung von wässrigen Flüssigkeiten beschrieben, die einen pH-Wert von mindestens 8 bei 25°C aufweisen, als Wärmeträgermedium, das in Kontakt mit magnetokalorischen Materialien steht.

Es wurde erfindungsgemäß gefunden, dass bei basischen pH-Werten die Korrosion der magnetokalorischen Materialien stark vermindert werden kann. Besonders gute Effekte werden erzielt, wenn wässrige Wärmeträgermedien wie in den Ansprüchen definiert eingesetzt werden, die Alkohole, Diole, Polyole oder Gemische davon enthalten und gleichzeitig einen pH-Wert von mindestens 8 aufweisen.

Der pH-Wert in den wässrigen Flüssigkeiten beträgt vorzugsweise mindestens 10, besonders bevorzugt mindestens 12, insbesondere 12 bis 14 bei 25°C.

Die Wassermischbarkeit der Alkohole, Alkoholamine, Diole und Polyole muss bei Mitverwendung von Wasser als Wärmeträgermedium so groß sein, dass sich beim gewünschten Mischungsverhältnis mit Wasser eine homogene Mischung bzw. Lösung ergibt. Sollen nur geringe Alkoholmengen vorgesehen sein, so kann auf weniger wassermischbare Alkohole ausgewichen werden. Bei hohen Alkoholanteilen sollte auf eine gute Wassermischbarkeit geachtet werden.

Bevorzugt sind die eingesetzten Alkohole C₁₋₆-Alkanole, besonders bevorzugt Methanol, Ethanol, n-Propanol, 2-Propanol oder Gemische davon.

Bevorzugt sind die eingesetzten Diole C₂₋₆-Alkandiole, insbesondere Ethylenglycol, Propylenglycol, Butandiol oder Gemische davon.

Besonders bevorzugte Polyole weisen einen alipathischen Kohlenwasserstoffrest mit 3 bis 6 Hydroxylgruppen auf.

Besonders bevorzugt werden Ethanol und Glycol eingesetzt.

Alkohole, Alkoholamine, Diole, Polyole oder Gemische davon können als alleinige Wärmeträgermedien eingesetzt werden oder in beliebigen geeigneten Mengen in wässrige Wärmeträgermeiden eingebracht werden. Erfindungsgemäß beträgt der Gehalt der wässrigen Wärmeträgermedien an Alkoholen, Diolen, Polyolen oder Gemischen davon 10 bis 70 Gew.-%, insbesondere 20 bis 50 Gew.-%.

Erfindungsgemäß werden besonders bevorzugt wässrige Wärmeträgermedien mit einem Gehalt an C₁₋₃-Alkanolen oder C₂₋₄-Alkandiolen im Bereich von 10 bis 90 Gew.-% oder die reinen Alkanole oder Diole eingesetzt.

Die magnetokalorischen Materialien sind vorzugsweise Teil eines magnetischen Kühlers, einer magnetischen Wärmepumpe oder eines magnetischen Generators. Zur Beschreibung üblicher magnetischer Kühler, magnetischer Wärmepumpen oder magnetischer Generatoren kann auf die eingangs erwähnte Literatur hingewiesen werden. Zusätzlich kann die WO 2006/074790 für die Beschreibung eines magnetischen Regenerators genannt werden.

Erfindungsgemäß können beliebige magnetokalorische Materialien eingesetzt werden.

Typische magnetokalorische Materialien sind Multimetallmassen, die oft mindestens drei metallische Elemente und zusätzlich gegebenenfalls nicht metallische Elemente enthalten. Der Ausdruck "metallbasierte Materialien" oder "magnetokalorische Materialien" gibt an, dass der überwiegende Anteil dieser Materialien aus Metallen bzw. metallischen Elementen aufgebaut ist. Typischerweise beträgt der Anteil am gesamten Material mindestens 50 Gew.-%, bevorzugt mindestens 75 Gew.-%, insbesondere mindestens 80 Gew.-%. Geeignete metallbasierte Materialien sind nachfolgend näher erläutert.

Besonders bevorzugt ist das magnetokalorische Material ausgewählt aus
(1) Verbindungen der allgemeinen Formel (I)

   (A_{y}B_{1-y})_{2+δ}C_{w}DₓE_{z} (I)

   mit der Bedeutung
   - A: Mn oder Co,
   - B: Fe, Cr oder Ni,
   - C, D, E: mindestens zwei von C, D, E sind voneinander verschieden, haben eine nicht-verschwindende Konzentration und sind ausgewählt aus P, B, Se, Ge, Ga, Si, Sn, N, As und Sb, wobei mindestens eines von C, D und E Ge, As oder Si ist,
   - δ: Zahl im Bereich von - 0,1 bis 0,1
   - w, x, y, z: Zahlen im Bereich von 0 bis 1, wobei w + x + z = 1 ist;
(2) auf La und Fe basierenden Verbindungen der allgemeinen Formeln (II) und/oder (III) und/oder (IV)

   La(FeₓAl₁₋ₓ)₁₃H_{y} oder La(FeₓSi₁₋ₓ)₁₃H_{y} (II)

   mit
   - x: Zahl von 0,7 bis 0,95
   - y: Zahl von 0 bis 3, vorzugsweise 0 bis 2;

   La(FeₓAl_{y}Co_{z})₁₃ oder La(FeₓSi_{y}Co_{z})₁₃ (III)

   - x: Zahl von 0,7 bis 0,95
   - y: Zahl von 0,05 bis 1 - x
   - z: Zahl von 0,005 bis 0,5;

   LaMnₓFe₂₋ₓGe (IV)

   mit
   - x: Zahl von 1,7 bis 1,95 und
(3) Heusler-Legierungen des Typs MnTP mit T Übergangsmetall und P einem p-dotierenden Metall mit einem electron count pro Atom e/a im Bereich von 7 bis 8,5.

Erfindungsgemäß besonders geeignete Materialien sind beispielsweise in WO 2004/068512, Rare Metals, Vol. 25, 2006, Seiten 544 bis 549, J. Appl. Phys. 99,08Q107 (2006), Nature, Vol. 415, 10. Januar 2002, Seiten 150 bis 152 und Physica B 327 (2003), Seiten 431 bis 437 beschrieben.

In den vorstehend genannten Verbindungen der allgemeinen Formel (I) sind bevorzugt C, D und E identisch oder unterschiedlich und ausgewählt aus mindestens einem von P, Ge, Si, Sn, As und Ga.

Das metallbasierte Material der allgemeinen Formel (I) ist vorzugsweise ausgewählt aus mindestens quarternären Verbindungen, die neben Mn, Fe, P und gegebenenfalls Sb zudem Ge oder Si oder As oder Ge und Si oder Ge und As oder Si und As oder Ge, Si und As enthalten.

Bevorzugt sind mindestens 90 Gew.-%, besonders bevorzugt mindestens 95 Gew.-% der Komponente A Mn. Besonders bevorzugt sind mindestens 90 Gew.-%, besonders bevorzugt mindestens 95 Gew.-% von B Fe. Bevorzugt sind mindestens 90 Gew.-%, besonders bevorzugt mindestens 95 Gew.-% von C P. Bevorzugt sind mindestens 90 Gew.-%, besonders bevorzugt mindestens 95 Gew.-% von D Ge. Bevorzugt sind mindestens 90 Gew.-%, besonders bevorzugt mindestens 95 Gew.-% von E Si. Vorzugsweise hat das Material die allgemeine Formel MnFe(P_{w}GeₓSi_{z}).

Bevorzugt ist x eine Zahl im Bereich von 0,3 bis 0,7, w ist kleiner oder gleich 1-x und z entspricht 1-x-w.

Das Material hat vorzugsweise die kristalline hexagonale Fe₂P-Struktur. Beispiele geeigneter Strukturen sind MnFeP_{0,45 bis 0,7}, Ge_{0,55 bis 0,30} und MnFeP_{0,5} bis _{0,70}, (Si/Ge)_{0,5 bis 0,30}.

Geeignete Verbindungen sind ferner Mn₁₊ₓFe₁₋ₓP_{1-y}Ge_{y} mit x im Bereich von -0,3 bis 0,5, y im Bereich von 0,1 bis 0,6. Anstelle von Ge kann auch As vorliegen. Ebenfalls geeignet sind Verbindungen der allgemeinen Formel Mn₁₊ₓFe₁₋ₓP_{1-y}Ge_{y-z}Sb_{z} mit x im Bereich von -0,3 bis 0,5, y im Bereich von 0,1 bis 0,6 und z kleiner als y und kleiner als 0,2. Ferner sind Verbindungen der Formel M₁₊ₓFe₁₋ₓP_{1-y}Ge_{y-z}Si_{z} geeignet mit x Zahl im Bereich von 0,3 bis 0,5, y im Bereich von 0,1 bis 0,66, z kleiner oder gleich y und kleiner als 0,6. Vorteilhaft sind auch Verbindungen des Typs MnₓFe₂₋ₓP_{y}As_{1-y} mit x = 0,7 bis 1,3 und y = 0,3 bis 0,7.

Bevorzugte auf La und Fe basierende Verbindungen der allgemeinen Formeln (II) und/oder (III) und/oder (IV) sind La(Fe_{0,90}Si_{0,10})₁₃, La(Fe_{0,89}Si_{0,11})₁₃, La(Fe_{0,880}Si_{0,120})₁₃, La(Fe_{0,877}Si_{0,123})₁₃, LaFe_{11,8}Si_{1,2}, La(Fe_{0,88}Si_{0,12})₁₃H_{0,5}, La(Fe_{0,88}Si_{0,12})₁₃H_{1,0}, LaFe_{11,7}Si_{1,3}H_{1,1}, LaFe_{11,57}Si_{1,43}H_{1,3}, La(Fe_{0,88}Si_{0,12})₁₃H_{1,5}, LaFe_{11,2}Co_{0,7}Si_{1,1}, LaFe_{11,5}Al_{1,5}C_{0,1}, LaFe_{11,5}Al_{1,5}C_{0,2}, LaFe_{11,5}Al_{1,5}C_{0,4}, LaFe_{11,5}Al_{1,5}Co_{0,5}, La(Fe_{0,94}Co_{0,06})_{11,83}Al_{1,17}, La(Fe_{0,92}Co_{0,08})_{11,83}Al_{1,17.}

Geeignete Mangan enthaltende Verbindungen sind MnFeGe, MnFe_{0,9}Co_{0,1}Ge, MnFe_{0,8}Co_{0,2}Ge, MnFe_{0,7}Co_{0,3}Ge, MnFe_{0,6}Co_{0,4}Ge, MnFe_{0,5}Co_{0,5}Ge, MnFe_{0,4}Co_{0,6}Ge, MnFe_{0,3}Co_{0,7}Ge, MnFe_{0,2}Co_{0,8}Ge, MnFe_{0,15}Co_{0,85}Ge, MnFe_{0,1}Co_{0,9}Ge, MnCoGe, Mn₅Ge_{2,5}Si_{0,5}, Mn₅Ge₂Si, Mn₅Ge_{1,5}Si_{1,5}, Mn₅GeSi₂, Mn₅Ge₃, Mn₅Ge_{2,9}Sb_{0,1}, Mn₅Ge_{2,8}Sb_{0,2}, Mn₅Ge_{2,7}Sb_{0,3}, LaMn_{1,9}Fe_{0,1}Ge, LaMn_{1,85}Fe_{0,15}Ge, LaMn_{1,8}Fe_{0,2}Ge, (Fe_{0,9}Mn_{0,13}C, (Fe_{0,8}Mn_{0,2})₃C, (Fe_{0,7}Mn_{0,3})₃C, Mn₃GaC, MnAs, (Mn,Fe)As, Mn_{1+δ}As_{0,8}Sb_{0,2}, MnAs_{0,75}Sb_{0,25}, Mn_{1,1}As_{0,75}Sb_{0,25}, Mn_{1,5}As_{0,75}Sb_{0,25}.

Erfindungsgemäß geeignete Heusler-Legierungen sind beispielsweise Fe₂MnSi_{0,5}Ge_{0,5}, Ni_{52,9}Mn_{22,4}Ga_{24,7}, Ni_{50,9}Mn_{24,7}Ga_{24,4}, Ni_{55,2}Mn_{18,6}Ga_{26,2}, N_{151,6}Mn_{24,7}Ga_{23,8}, Ni_{52,7}Mn_{23,9}Ga_{23,4}, CoMnSb, CoNb_{0,2}Mn_{0,8}Sb, CoNb_{0,4}Mn_{0,6}Sb, CoNb_{0,6}Mn_{0,4}Sb, Ni₅₀Mn₃₅Sn₁₅, Ni₅₀Mn₃₇Sn₁₃, MnFeP_{0,45}AS_{0,55}, MnFeP_{0,47}As_{0,53}, Mn_{1,1}Fe_{0,9}P_{0,47}As_{0,53}, MnFeP_{0,89-χ}Si_{χ}Ge_{0,11}, χ = 0,22, χ = 0,26, χ = 0,30, χ = 0,33.

Die durchschnittliche Kristallitgröße liegt häufig im Bereich von 10 bis 400 nm, besonders bevorzugt 20 bis 200 nm, insbesondere 30 bis 80 nm. Die durchschnittliche Kristallitgröße kann dabei durch Röntgendiffraktion ermittelt werden. Wird die Kristallitgröße zu klein, so vermindert sich der maximale magnetokalorische Effekt. ist die Kristallitgröße hingegen zu groß, steigt die Hysterese des Systems an.

Die erfindungsgemäß geeigneten metallbasierten Materialien werden bevorzugt in der magnetischen Kühlung eingesetzt, wie sie vorstehend beschrieben wurde. Ein entsprechender Kühlschrank weist dabei neben einem Magneten, vorzugsweise Permanentmagneten, metallbasierte Materialien auf, wie sie vorstehend beschrieben sind. Auch die Kühlung von Computerchips und solaren Stromerzeugern kommt in Betracht. Weitere Anwendungsgebiete sind Wärmepumpen und Klimaanlagen.

Die metallbasierten Materialien können jede beliebige Festkörperform aufweisen. Sie können beispielsweise in Form von Flocken, Bändern, Drähten, Puder, Pulver wie auch in Form von Formkörpern vorliegen. Formkörper wie Monolithen oder Wabenkörper können beispielsweise durch ein Heißextrusionsverfahren hergestellt werden. Es können beispielsweise Zelldichten von 400 bis 1600 CPI oder mehr vorliegen. Auch durch Walzverfahren erhältliche dünne Bleche sind bevorzugt. Vorteilhaft sind nicht-poröse Formkörper aus geformtem dünnem Material, z. B. Röhren, Platten, Netze, Gitter oder Stäbe. Auch eine Formgebung durch Metallspritzgussverfahren (MIM) ist möglich.

Die Herstellung der metallbasierten Materialien für die magnetische Kühlung oder Wärmepumpen oder Generatoren, kann die folgenden Schritte umfassen:
a) Umsetzung von chemischen Elementen und/oder Legierungen in einer Stöchiometrie, die dem metallbasierten Material entspricht, in der Fest- und/oder Flüssigphase,
b) gegebenenfalls Überführen des Umsetzungsproduktes aus Stufe a) in einen Festkörper,
c) Sintern und/oder Tempern des Festkörpers aus Stufe a) oder b),
d) Abschrecken des gesinterten und/oder getemperten Festkörpers aus Stufe c) mit einer Abkühlgeschwindigkeit von mindestens 100 K/s.

Die thermische Hysterese kann signifikant vermindert werden, wenn die metallbasierten Materialien nach dem Sintern und/oder Tempern nicht langsam auf Umgebungstemperatur abgekühlt werden, sondern mit einer hohen Abkühlgeschwindigkeit abgeschreckt werden. Dabei beträgt die Abkühlgeschwindigkeit mindestens 100 K/s. Bevorzugt beträgt die Abkühlgeschwindigkeit 100 bis 10000 K/s, besonders bevorzugt 200 bis 1300 K/s. Speziell bevorzugt sind Abkühlgeschwindigkeiten von 300 bis 1000 K/s.

Das Abschrecken kann dabei durch beliebige geeignete Kühlverfahren erreicht werden, beispielsweise durch Abschrecken des Festkörpers mit Wasser oder wasserhaltigen Flüssigkeiten, beispielsweise gekühltem Wasser oder Eis/Wasser-Mischungen. Die Festkörper können beispielsweise in eisgekühltes Wasser fallengelassen werden. Es ist ferner möglich, die Festkörper mit unterkühlten Gasen wie flüssigem Stickstoff abzuschrecken. Weitere Verfahren zum Abschrecken sind dem Fachmann bekannt. Vorteilhaft ist dabei ein kontrolliertes und schnelles Abkühlen.

Ohne an eine Theorie gebunden zu sein, kann die verminderte Hysterese auf kleinere Korngrößen für die abgeschreckten (gequenchten) Zusammensetzungen zurückgeführt werden.

In alternativen Verfahren wird jeweils nach dem Sintern und Tempern langsam abgekühlt, was zur Ausbildung größerer Korngrößen und damit zur Verstärkung der thermischen Hysterese führt.

In Schritt (a) des Verfahrens erfolgt die Umsetzung der Elemente und/oder Legierungen, die im späteren metallbasierten Material enthalten sind, in einer Stöchiometrie, die dem metallbasierten Material entspricht, in der Fest- oder Flüssigphase.

Vorzugsweise wird die Umsetzung in Stufe a) durch gemeinsames Erhitzen der Elemente und/oder Legierungen in einem geschlossenen Behältnis oder in einem Extruder, oder durch Festphasenumsetzung in einer Kugelmühle erfolgen. Besonders bevorzugt wird eine Festphasenumsetzung durchgeführt, die insbesondere in einer Kugelmühle erfolgt. Eine derartige Umsetzung ist prinzipiell bekannt, vergleiche die einleitend aufgeführten Schriften. Dabei werden typischerweise Pulver der einzelnen Elemente oder Pulver von Legierungen aus zwei oder mehr der einzelnen Elemente, die im späteren metallbasierten Material vorliegen, in geeigneten Gewichtsanteilen pulverförmig vermischt. Falls notwendig, kann zusätzlich ein Mahlen des Gemisches erfolgen, um ein mikrokristallines Pulvergemisch zu erhalten. Dieses Pulvergemisch wird vorzugsweise in einer Kugelmühle aufgeheizt, was zu einer weiteren Verkleinerung wie auch guten Durchmischung und zu einer Festphasenreaktion im Pulvergemisch führt.

Alternativ werden die einzelnen Elemente in der gewählten Stöchiometrie als Pulver vermischt und anschließend aufgeschmolzen.

Das gemeinsame Erhitzen in einem geschlossenen Behälter erlaubt die Fixierung flüchtiger Elemente und die Kontrolle der Stöchiometrie. Gerade bei Mitverwendung von Phosphor würde dieser in einem offenen System leicht verdampfen.

An die Umsetzung schließt sich ein Sintern und/oder Tempern des Festkörpers an, wobei ein oder mehrere Zwischenschritte vorgesehen sein können. Beispielsweise kann der in Stufe a) erhaltene Feststoff verpresst werden, bevor er gesintert und/oder getempert wird. Hierdurch wird die Dichte des Materials erhöht, so dass bei der späteren Anwendung eine hohe Dichte des magnetokalorischen Materials vorliegt. Dies ist insbesondere deshalb vorteilhaft, da das Volumen, in dem das magnetische Feld herrscht, vermindert werden kann, was mit erheblichen Kosteneinsparungen verbunden sein kann. Das Verpressen ist an sich bekannt und kann mit oder ohne Presshilfsmittel durchgeführt werden. Dabei kann jede beliebige geeignete Form zum Pressen verwendet werden. Durch das Verpressen ist es bereits möglich, Formkörper in der gewünschten dreidimensionalen Struktur zu erzeugen. An das Verpressen kann sich das Sintern und/oder Tempern der Stufe c) gefolgt vom Abschrecken der Stufe d) anschließen.

Alternativ ist es möglich, den aus der Kugelmühle erhaltenen Feststoff einem Schmelzspinnverfahren zuzuführen. Schmelzspinnverfahren sind an sich bekannt und beispielsweise in Rare Metals, Vol. 25, Oktober 2006, Seiten 544 bis 549 wie auch in WO 2004/068512 beschrieben.

Dabei wird die in Stufe a) erhaltene Zusammensetzung geschmolzen und auf eine sich drehende kalte Metallwalze gesprüht. Dieses Sprühen kann mittels Überdruck vor der Sprühdüse oder Unterdruck hinter der Sprühdüse erreicht werden. Typischerweise wird eine sich drehende Kupfertrommel oder -walze verwendet, die zudem gegebenenfalls gekühlt werden kann. Die Kupfertrommel dreht sich bevorzugt mit einer Oberflächengeschwindigkeit von 10 bis 40 m/s, insbesondere 20 bis 30 m/s. Auf der Kupfertrommel wird die flüssige Zusammensetzung mit einer Geschwindigkeit von vorzugsweise 10² bis 10⁷ K/s abgekühlt, besonders bevorzugt mit einer Geschwindigkeit von mindestens 10⁴ K/s, insbesondere mit einer Geschwindigkeit von 0,5 bis 2 x 10⁶ K/s.

Das Schmelzspinnen kann wie auch die Umsetzung in Stufe a) unter vermindertem Druck oder unter Inertgasatmosphäre durchgeführt werden.

Durch das Meltspinning wird eine hohe Verarbeitungsgeschwindigkeit erreicht, da das nachfolgende Sintern und Tempern verkürzt werden kann. Gerade im technischen Maßstab wird so die Herstellung der metallbasierten Materialien wesentlich wirtschaftlicher. Auch die Sprühtrocknung führt zu einer hohen Verarbeitungsgeschwindigkeit. Besonders bevorzugt wird das Schmelzespinnen (Melt spinning) durchgeführt.

Alternativ kann in Stufe b) ein Sprühkühlen durchgeführt werden, bei dem eine Schmelze der Zusammensetzung aus Stufe a) in einen Sprühturm gesprüht wird. Der Sprühturm kann dabei beispielsweise zusätzlich gekühlt werden. In Sprühtürmen werden häufig Abkühlgeschwindigkeiten im Bereich von 10³ bis 10⁵ K/s, insbesondere etwa 10⁴ K/s erreicht.

Das Sintern und/oder Tempern des Festkörpers erfolgt in Stufe c) vorzugsweise zunächst bei einer Temperatur im Bereich von 800 bis 1400 °C zum Sintern und nachfolgend bei einer Temperatur im Bereich von 500 bis 750 °C zum Tempern. Diese Werte gelten insbesondere für Formkörper, während für Pulver niedrigere Sinter- und Tempertemperaturen angewendet werden können. Beispielsweise kann dann das Sintern bei einer Temperatur im Bereich von 500 bis 800 °C erfolgen. Für Formkörper/Festkörper erfolgt das Sintern besonders bevorzugt bei einer Temperatur im Bereich von 1000 bis 1300 °C, insbesondere von 1100 bis 1300 °C. Das Tempern kann dann beispielsweise bei 600 bis 700 °C erfolgen.

Das Sintern wird vorzugsweise für einen Zeitraum von 1 bis 50 Stunden, besonders bevorzugt 2 bis 20 Stunden, insbesondere 5 bis 15 Stunden durchgeführt. Das Tempern wird vorzugsweise für eine Zeit im Bereich von 10 bis 100 Stunden, besonders bevorzugt 10 bis 60 Stunden, insbesondere 30 bis 50 Stunden durchgeführt. Die exakten Zeiträume können dabei je nach Material den praktischen Anforderungen angepasst werden.

Bei Einsatz des Schmelzspinnverfahrens kann auf ein Sintern häufig verzichtet werden, und das Tempern kann stark verkürzt werden, beispielsweise auf Zeiträume von 5 Minuten bis 5 Stunden, bevorzugt 10 Minuten bis 1 Stunde. Im Vergleich zu den sonst üblichen Werten von 10 Stunden für das Sintern und 50 Stunden für das Tempern resultiert ein extremer Zeitvorteil.

Durch das Sintern/Tempern kommt es zu einem Anschmelzen der Korngrenzen, so dass sich das Material weiter verdichtet.

Durch das Schmelzen und schnelle Abkühlen in Stufe b) kann damit die Zeitdauer für Stufe c) erheblich vermindert werden. Dies ermöglicht auch eine kontinuierliche Herstellung der metallbasierten Materialien.

Besonders bevorzugt ist die Verfahrenssequenz
a) Festphasenumsetzung von chemischen Elementen und/oder Legierungen in einer Stöchiometrie, die dem metallbasierten Material entspricht, in einer Kugelmühle,
b) Schmelzspinnen des in Stufe a) erhaltenen Materials,
c) Tempern des Festkörpers aus Stufe b) für einen Zeitraum von 10 Sekunden oder 1 Minute bis 5 Stunden, bevorzugt 30 Minuten bis 2 Stunden bei einer Temperatur im Bereich von 430 bis 1200, bevorzugt 800 bis 1000 °C
d) Abschrecken des getemperten Festkörpers aus Stufe c) mit einer Abkühlgeschwindigkeit von 200 bis 1300 K/s.

Hierin offenbart ist auch ein Wärmeträgermedium für magnetische Kühler, magnetische Wärmepumpen, magnetische Generatoren, enthaltend, vorzugsweise wassermischbare, Alkohole, Alkoholamine, Diole, Polyole oder Gemische davon.

Die Erfindung betrifft auch magnetische Kühler, magnetische Wärmepumpen oder magnetische Generatoren wie in den Ansprüchen definiert, enthaltend mindestens ein magnetokalorisches Material und ein Wärmeträgermedium, wobei das Wärmeträgermedium wassermischbare Alkohole, Diole, Polyole oder Gemische davon enthält oder aus diesen besteht und/oder einen pH-Wert von mindestens 8 aufweist.

Vorzugsweise enthält das Wärmeträgermedium 50 bis 90 Gew.-% Wasser, besonders bevorzugt 60 bis 80 Gew.-% Wasser.

Das Wärmeträgermedium kann auch weitere übliche Inhaltsstoffe enthalten, beispielsweise Korrosionsinhibitoren, Viskositätsmodifizierer, Biozide, usw.

Die Erfindung wird durch die nachstehenden Vergleichs-Beispiele näher erläutert.

### Vergleichs-Beispiele (nicht erfindungsgemäß)

Als magnetokalorisches Material wurde pulverförmiges MnFeP_{0,5}As_{0,5} eingesetzt.

### Vergleichs-Beispiel 1

10 g des pulverförmigen Materials wurden in 100 ml dest. Wasser zwei Wochen gerührt. Eine Analyse zeigt, dass ca. 2% des in der Verbindung vorhandenen Arsens gelöst wurden.

### Vergleichs-Beispiel 2

10 g des pulverförmigen Materials wurden in 100 ml Wasser mit pH = 11, der mit NaOH eingestellt wurde, zwei Wochen gerührt. Eine Analyse zeigt, dass weniger als 0.12% des in der Verbindung vorhandenen Arsens gelöst wurden.

### Vergleichs-Beispiel 3

10 g des pulverförmigen Materials wurden in einer Mischung aus Ethanol und Wasser (1:1) zwei Wochen gerührt. Eine Analyse zeigt, dass ca. 0.3% des in der Verbindung vorhandenen Arsens gelöst wurden.

## Patentansprüche

1. Verwendung von wässrigen Wärmeträgermedien, die 10 bis 70 Gew.-% wassermischbare Alkohole, Diole, Polyole oder Gemische davon enthalten und gleichzeitig einen pH-Wert von mindestens 8 aufweisen, und die in Kontakt mit magnetokalorischen Materialien stehen, als Korrosionsschutzmittel zur Verhinderung der Korrosion der magnetokalorischen Materialien.

2. Verwendung nach Anspruch 1, **dadurch gekennzeichnet, dass** die Wärmeträgermedien einen pH-Wert von mindestens 10, bevorzugt mindestens 12, insbesondere 12 bis 14 bei 25°C haben.

3. Verwendung nach Anspruch 1 oder 2, **dadurch gekennzeichnet, dass** der Alkohol Methanol, Ethanol, n-Propanol oder 2-Propanol ist und das Diol Ethylenglycol, Propylenglycol oder Butandiol ist.

4. Verwendung nach einem der Ansprüche 1 bis 3, **dadurch gekennzeichnet, dass** die magnetokalorischen Materialien Teil eines magnetischen Kühlers, einer magnetischen Wärmepumpe oder eines magnetischen Generators sind.

5. Verwendung nach einem der Ansprüche 1 bis 4, **dadurch gekennzeichnet, dass** das magnetokalorische Material ausgewählt ist aus
(1) Verbindungen der allgemeinen Formel (I)
(A_{y}B_{1-y})_{2+δ}C_{w}DₓE_{z} (I)
mit der Bedeutung
A Mn oder Co,
B Fe, Cr oder Ni,
C, D, E mindestens zwei von C, D, E sind voneinander verschieden, haben eine nicht-verschwindende Konzentration und sind ausgewählt aus P, B, Se, Ge, Ga, Si, Sn, N, As und Sb, wobei mindestens eines von C, D und E Ge, As oder Si ist,
δ Zahl im Bereich von - 0,1 bis 0,1
w, x, y, z Zahlen im Bereich von 0 bis 1, wobei w + x + z = 1 ist;
(2) auf La und Fe basierenden Verbindungen der allgemeinen Formeln (II) und/oder (III) und/oder (IV)
La(FeₓAl₁₋ₓ)₁₃H_{y} oder La(FeₓSi₁₋ₓ)₁₃H_{y} (II)
mit
x Zahl von 0,7 bis 0,95
y Zahl von 0 bis 3;
La(FeₓAl_{y}Co_{z})₁₃ oder La(FeₓSi_{y}Co_{z})₁₃ (III)
mit
x Zahl von 0,7 bis 0,95
y Zahl von 0,05 bis 1 - x
z Zahl von 0,005 bis 0,5;
LaMnₓFe₂₋ₓGe (IV)
mit
x Zahl von 1,7 bis 1,95 und
(3) Heusler-Legierungen des Typs MnTP mit T Übergangsmetall und P einem p-dotierenden Metall mit einem electron count pro Atom e/a im Bereich von 7 bis 8,5.

6. Verwendung nach Anspruch 5, **dadurch gekennzeichnet, dass** das magnetokalorische Material ausgewählt ist aus mindestens quarternären Verbindungen der allgemeinen Formel (I), die neben Mn, Fe, P und gegebenenfalls Sb zusätzlich Ge oder Si oder As oder Ge und As oder Si und As, oder Ge, Si und As enthalten.

7. Magnetischer Kühler, magnetische Wärmepumpe oder magnetischer Generator, enthaltend mindestens ein magnetokalorisches Material und ein wässriges Wärmeträgermedium, **dadurch gekennzeichnet, dass** das Wärmeträgermedium 10 bis 70 Gew.-% wassermischbare Alkohole, Diole, Polyole oder Gemische davon enthält und einen pH-Wert von mindestens 8 aufweist und als Korrosionsschutzmittel zur Verhinderung der Korrosion der magnetokalorischen Materialien dient.

## Claims

1. The use of aqueous heat carrier media which comprise 10 to 70% by weight of water-miscible alcohols, diols, polyols or mixtures thereof and simultaneously have a pH of at least 8, and which are in contact with magnetocaloric materials, as an anticorrosive for prevention of corrosion of the magnetocaloric materials.

2. The use according to claim 1, wherein the heat carrier media have a pH of at least 10, preferably at least 12, especially 12 to 14 at 25°C.

3. The use according to claim 1 or 2, wherein the alcohol is methanol, ethanol, n-propanol or 2-propanol, and the diol is ethylene glycol, propylene glycol or butanediol.

4. The use according to any one of claims 1 to 3, wherein the magnetocaloric materials are part of a magnetic cooler, of a magnetic heat pump or of a magnetic generator.

5. The use according to any one of claims 1 to 4, wherein the magnetocaloric material is selected from
(1) compounds of the general formula (I)
(A_{y}B_{1-y}) _{2+δ}C_{w}DₓE_{z} (I)
where
A is Mn or Co,
B is Fe, Cr or Ni,
C, D and E at least two of C, D and E are different, have a non-vanishing concentration and are selected from P, B, Se, Ge, Ga, Si, Sn, N, As and Sb, where at least one of C, D and E is Ge, As or Si,
δ is a number in the range from -0.1 to 0.1,
w, x, y, z are numbers in the range from 0 to 1, where w + x + z = 1;
(2) La- and Fe-based compounds of the general formulae (II) and/or (III) and/or (IV)
La (FeₓAl₁₋ₓ)₁₃H_{y} or La(FeₓSi₁₋ₓ)₁₃H_{y} (II)
where
x is a number from 0.7 to 0.95,
y is a number from 0 to 3;
La (FₑₓAl_{y}Co_{z})₁₃ or La (FeₓSi_{y}Co_{z})₁₃ (III)
where
x is a number from 0.7 to 0.95,
y is a number from 0.05 to 1 - x,
z is a number from 0.005 to 0.5;
LaMnₓFe₂₋ₓGe (IV)
where
x is a number from 1.7 to 1.95 and
(3) Heusler alloys of the MnTP type where T is a transition metal and P is a p-doping metal having an electron count per atom e/a in the range from 7 to 8.5.

6. The use according to claim 5, wherein the magnetocaloric material is selected from at least quaternary compounds of the general formula (I) which, as well as Mn, Fe, P and optionally Sb, additionally comprise Ge or Si or As or Ge and As or Si and As, or Ge, Si and As.

7. A magnetic cooler, magnetic heat pump or magnetic generator, comprising at least one magnetocaloric material and an aqueous heat carrier medium, wherein the heat carrier medium comprises 10 to 70% by weight of water-miscible alcohols, diols, polyols or mixtures thereof and has a pH of at least 8 and serves as an anticorrosive for prevention of corrosion of the magnetocaloric materials.

## Revendications

1. Utilisation de milieux caloporteurs aqueux, qui contiennent 10 à 70 % en poids d'alcools, diols, polyols miscibles avec l'eau ou leurs mélanges, et présentent simultanément un pH d'au moins 8, et qui sont en contact avec des matériaux magnétocalorique, en tant qu'agent anticorrosion pour éviter la corrosion des matériaux magnétocaloriques.

2. Utilisation selon la revendication 1, **caractérisée en ce que** les milieux caloporteurs ont un pH d'au moins 10, de préférence d'au moins 12, notamment de 12 à 14 à 25 °C.

3. Utilisation selon la revendication 1 ou 2, **caractérisée en ce que** l'alcool est le méthanol, l'éthanol, le n-propanol ou le 2-propanol, et le diol est l'éthylène glycol, le propylène glycol ou le butanediol.

4. Utilisation selon l'une quelconque des revendications 1 à 3, **caractérisée en ce que** les matériaux magnétocaloriques font partie d'un refroidisseur magnétique, d'une pompe à chaleur magnétique ou d'un générateur magnétique.

5. Utilisation selon l'une quelconque des revendications 1 à 4, **caractérisée en ce que** le matériau magnétocalorique est choisi parmi
(1) les composés de formule générale (I)
**(A_{y}B_{1-y})**_{**2+**δ}C**_{w}DₓE_{z}** (**I**)
avec les significations
A Mn ou Co,
B Fe, Cr ou Ni,
C, D, E au moins deux éléments parmi C, D, E sont différents les uns des autres, ont une concentration non insignifiante et sont choisis parmi P, B, Se, Ge, Ga, Si, Sn, N, As et Sb, au moins un élément parmi C, D et E étant Ge, As ou Si,
δ un nombre dans la plage allant de -0,1 à 0,1,
w, x, y, z nombres dans la plage allant de 0 à 1, avec w + x + z = 1 ;
(2) les composés à base de La et Fe de formule générale (II) et/ou (III) et/ou (IV)
**La(FeₓAl₁₋ₓ)₁₃H_{y ou} La(FeₓSiₓ)₁₃H_{y}** (II)
avec
x un nombre de 0,7 à 0,95,
y un nombre de 0 à 3 ;
La(FₑAl_{y}Co_{z})_{13 ou} La(FeₓSi_{y}Co_{z})₁₃ (III)
avec
x un nombre de 0,7 à 0,95,
y un nombre de 0,05 à 1-x,
z un nombre de 0,005 à 0,5 ;
**LaMnₓFe₂₋ₓGe** (IV)
avec
x un nombre de 1,7 à 1,95, et
(3) les alliages de Heusler de type MnTP avec T = métal de transition et P = un métal à dopage p ayant un nombre d'électrons par atome e/a dans la plage allant de 7 à 8,5.

6. Utilisation selon la revendication 5, **caractérisée en ce que** le matériau magnétocalorique est choisi parmi les composés au moins quaternaires de formule générale (I), qui contiennent en plus de Mn, Fe, P et éventuellement Sb en outre Ge ou Si ou As ou Ge et As ou Si et As, ou Ge, Si et As.

7. Refroidisseur magnétique, pompe à chaleur magnétique ou générateur magnétique, contenant au moins un matériau magnétocalorique et un milieu caloporteur aqueux, **caractérisé en ce que** le milieu caloporteur contient 10 à 70 % en poids d'alcools, diols, polyols miscibles avec l'eau ou leurs mélanges, et présente un pH d'au moins 8, et sert d'agent anticorrosion pour éviter la corrosion des matériaux magnétocaloriques.
